# EUROPÄISCHE PATENTSCHRIFT

(11) **EP 3 101 284 B1**
(45) Veröffentlichungstag und Bekanntmachung des Hinweises auf die Patenterteilung: **27.12.2017**
(21) Anmeldenummer: 16172590.8
(22) Anmeldetag: 02.06.2016
(51) Int. Cl.: F15B 19/00, F15B 20/00, F15B 5/00

(54) **ELEKTRO-PNEUMATISCHER AKTOR**
ELECTRO-PNEUMATIC ACTUATOR
ACTIONNEUR ELECTRO-PNEUMATIQUE

(30) Priorität: 03.06.2015 DE 102015007147
(43) Veröffentlichungstag der Anmeldung: 07.12.2016
(73) Patentinhaber: Samson Aktiengesellschaft, 60314 Frankfurt (DE)
(72) Erfinder: Kah, Harald, 65611 Brechen (DE)
(74) Vertreter: Schmid, Nils T.F.

(56) Entgegenhaltungen:
- DE-A1-102012 021 388
- DE-B3-102012 021 387
- DE-C2- 19 636 418
- US-A- 4 137 942
- US-A- 4 712 173
- US-A1- 2011 245 982

## Beschreibung

Die Erfindung betrifft einen elektro-pneumatischen Aktor, wie einen Stellungsregler oder eine I/P-Wandler-Anordnung, für ein Feldgerät einer prozesstechnischen Anlage, wie eine Brauerei, eine petrochemischen Anlage oder dergleichen. Ein solcher elektro-pneumatische Aktor ist im Allgemeinen dazu ausgelegt, ein pneumatisches Antriebsbetätigungssignal an einen pneumatischen Antrieb auszugeben, um ein Stellgerät, wie ein Stellventil, des Feldgeräts zu stellen. Elektro-pneumatische Aktoren sind z.B. aus US2011/245982 A1, DE 10 2012 021387 B3, DE19636418 A1 bekannt.

Der elektro-pneumatische Aktor umfasst eine pneumatisch betriebene Anzeige zum Anzeigen wenigstens einer feldgerätspezifischen Betriebs information. Eine solche Anzeige ist zum Beispiel in Form eines pneumatisch betätigten Indikators zur visuellen Anzeige der Stellung eines pneumatisch betätigten Ventils bekannt, das zum Öffnen oder Schließen einer Fluidleitung dient. Das Ventil hat einen pneumatischen Antrieb mit einer Arbeitskammer, die mit einem Antriebsdruck beaufschlagbar ist, der entgegen einer Federvorspannung wirkt, um einen Antriebskolben zum Betätigen des Ventils zu bewegen. Der visuelle Indikator ist in ein Gewinde im Antriebskolben des Antriebs eingeschraubt, um der Bewegung des Antriebskolbens zu folgen. Der visuelle Indikator zeigt optisch an, ob der pneumatische Antrieb mit dem Antriebsdruck beaufschlagt ist oder nicht.

Es ist eine Aufgabe der Erfindung, die Nachteile des Stands der Technik zu überwinden, insbesondere einen elektro-pneumatischen Aktor bereitzustellen, der eine pneumatisch betriebene Anzeige aufweist, die eine frei wählbare Betriebsinformation anzeigen kann.

Diese Aufgabe wird gelöst durch die Merkmale des Vorrichtungsanspruchs 1.

Demnach umfasst der erfindungsgemäße elektro-pneumatische Aktor, der beispielsweise ein Strom-Druckwandler Anordnung oder ein mit einem Mikrorechner versehener Stellungsregler mit einem Strom-Druckwandler aufweisen kann, wenigstens eine pneumatisch betriebene Anzeige zum optischen und/oder akustischen Anzeigen wenigstens einer feldgerätspezifischen Betriebsinformation. Ein optisches Anzeigen kann beispielsweise durch einen translationsbeweglichen Signalkörper mit einer gut sichtbaren Signalfläche realisiert sein, die leuchtet, spiegelartig reflektiert oder mit einer im Kontrast zur Umgebung gehaltenen Farbe, wie einer Neonfarbe, versehen ist. Ein akustisches Anzeigen kann beispielsweise durch einen Tonerzeuger mit einem Resonanzraum, in dem ein Luftstrom zur Erzeugung des Tons strömen kann, wie eine Trompete, eine Pfeife, eine Sirene oder dergleichen, realisiert sein. Die pneumatisch betriebene Anzeige kann auch sowohl optisch als auch akustisch ein Signal oder einen Hinweis wahrnehmbar abgeben. Die Verwendung von pneumatischer Energie zum Betrieb der Anzeige erlaubt das Einsparen elektrischer Energie des prozesstechnischen Feldgeräts. Die verfügbare pneumatische Energie eines Feldgeräts ist oftmals insbesondere aus sicherheitstechnischen Gründen wesentlich größer als dessen verfügbare elektrische Energie, sofern überhaupt elektrische Energie zur Verfügung steht. Erfindungsgemäß übermittelt der elektro-pneumatische Aktor der Anzeige ein pneumatisches Anzeigebetätigungssignal, das sich von dem pneumatischen Antriebsbetätigungssignal unterscheiden kann. Aufgrund der strukturellen Möglichkeit, das Anzeigebetätigungssignal für die pneumatisch betriebene Anzeige unterschiedlich gestalten zu können, kann die Anzeige andere Betriebsinformationen, beispielsweise bezüglich des Ventils anzeigen, als die bloße Wiedergabe des im pneumatischen Antrieb herrschenden Antriebsdrucks. Vorzugsweise ist das pneumatische Anzeigebetätigungssignal irgendeiner feldgerätspezifischen Betriebsinformation zugeordnet, beispielsweise kann als Betriebsinformation ein Sollwert, ein Istwert oder eine Regelungsgröße des Feldgeräts, insbesondere eines Stellungsreglers des Ventils, angezeigt werden. Die Betriebsinformation betrifft beispielsweise den durch das Feldgerät zu steuernden oder zu regelnden Prozess, wie etwa eine Temperatur, ein Druck, ein Durchflussvolumen oder dergleichen, des Prozessfluids. Alternativ oder zusätzlich betrifft die Betriebsinformation die Stellung des Antriebs oder des Ventils. Die Betriebsinformation kann auch eine Verfahrzeit betreffen, also die erforderliche Zeit zum Verfahren des Ventils über eine bestimmte Streckenlänge und/oder von einer bestimmten Ausgangsstelle zu einer bestimmten Endstelle betreffen. Als Betriebsinformation kann auch ein auf Basis einer Kombination verschiedener einzelner Betriebsinformationen ermittelte abgeleitete Betriebsinformation dienen oder eine Tendenz betreffend eine bestimmte Betriebsinformation, die ausgehend von sukzessiven Zeitpunkten, die beispielsweise Minuten, Stunden, Tage oder Wochen auseinander liegen können, ermittelt wird, insbesondere eine Tendenz betreffend eine Verfahrzeit, wobei Verfahrzeiten etwa betreffend derselben Streckenlänge für mehrere aufeinanderfolgende Tage analysiert werden. Solche insbesondere tendenziellen oder abgeleiteten Betriebsinformationen können als Hinweis auf einen Verschleißgrad oder einen drohenden Ausfalls dienen und zur Warnung angezeigt werden. Indem der Anzeige ein individuelles pneumatisches Anzeigebetätigungssignal übermittelt wird, kann, entkoppelt vom Antriebsdruck beziehungsweise Antriebsbetätigungssignal, unter Nutzung pneumatischer Energie jede beliebige Betriebsinformation angezeigt werden. Die Betriebsinformation, welche durch die pneumatisch betriebene Anzeige einer Bedienperson auch insbesondere von einer größeren Entfernung von dem zu überwachenden Feldgerät kenntlich gemacht werden. Es können auch mehrere unterschiedliche Betriebsinformationen kenntlich gemacht werden, wobei jeder Betriebsinformation jeweils ein spezifisches Anzeigesignal vorab zugeordnet ist. Die voreingestellte Zuordnung kann beispielsweise durch farbige Zuordnung, Kontrastierung oder Tonerzeugung unterschieden werden.
Ein Anzeigebetätigungssignal, das sich von dem pneumatischen Antriebsbetätigungssignal für den pneumatischen Antrieb unterscheidet, kann beispielsweise dadurch realisiert werden, dass zwei oder mehrere I/P-Wandler verwendet werden, wobei ein Wandler ausschließlich zur Betätigung des pneumatischen Antriebs dient, während der wenigstens eine weitere I/P-Wandler wenigstens ein pneumatisches Anzeigebetätigungssignal, vorzugsweise mehrere Anzeigebetätigungssignale, erzeugt.
Vorzugsweise ist für die Erzeugung des wenigstens einen pneumatischen Anzeigebetätigungssignals eine Informationszuordnung realisiert, bei der das wenigstens eine pneumatische Anzeigebetätigungssignal einer bestimmten feldgerätspezifischen Betriebsinformation zugeordnet wird. Dies kann beispielsweise durch einen Mikrorechner insbesondere eines Stellungsreglers des Feldgeräts durchgeführt werden. Es sei klar, dass verschiedene Betriebszustände des Feldgeräts mit vorbestimmten pneumatischen Anzeigebetätigungssignalen luftdruckspezifisch zugeordnet sein können.
Die von dem elektro-pneumatischen Aktor realisierbare Unterschiedlichkeit von dem Anzeigebetätigungssignal gegenüber dem Antriebsbetätigungssignal kann sowohl durch eine elektro-pneumatische Strukturierung realisiert sein, wie oben angegeben ist, mittels unterschiedlicher I/P-Wandler, oder durch eine elektronische Schaltung, beispielsweise durch eine Mikroschaltung. Der elektro-pneumatische Aktor umfasst einen elektro-pneumatischen Anzeigesignalwandler zum Abgeben des wenigstens einen pneumatischen Anzeigebetätigungssignals. Das wenigstens eine pneumatische Anzeigebetätigungssignal hängt von der feldgerätspezifischen Betriebsinformation ab, der er zugeordnet ist. Neben dem elektro-pneumatischen Anzeigesignalwandler kann der elektro-pneumatische Aktor gemäß der Erfindung einen elektro-pneumatischen Antriebssignalwandler haben, der beispielsweise gemäß einer Regelungsroutine (Sollwert/Istwert-Signalverarbeitung bezüglich Stellung des zu stellenden Stellglieds) ein oder mehrere pneumatische Antriebsbetätigungssignale an den pneumatischen Antrieb, wie einen einfach- oder doppeltwirkenden pneumatischen Antrieb, abgeben kann.

Bei einer bevorzugten Ausführung der Erfindung hat der elektro-pneumatische Aktor gemäß der Erfindung eine Elektronikkomponente zum Erfassen, Erhalten, Abgeben und/oder Generieren der wenigstens einen feldgerätspezifischen Betriebsinformation. Die Elektronikkomponente, welche bestimmt, wann und wie das Anzeigebetätigungssignal auszugeben ist, kann schlicht die anzuzeigende Betriebsinformation, beispielsweise von einem Sensor, erhalten und ein Anzeigen auslösen. Auch die Elektronikkomponente selbst kann die anzuzeigende feldgerätspezifische Betriebsinformation auslösen. Die Elektronikkomponente soll dazu ausgelegt sein, die feldgerätspezifische Betriebsinformation beispielsweise an einen I/P-Wandler abzugeben. In dem Fall, dass die Elektronikkomponente für eine Regelung verantwortlich ist, kann sie selbst die anzuzeigende feldgerätspezifische Betriebsinformation generieren. Die Elektronikkomponente ist vorzugsweise derart mit einer pneumatisch betriebenen Anzeige strukturell gekoppelt, dass das Ausgeben des spezifischen pneumatischen Anzeigebetätigungssignals veranlasst wird.

Vorzugsweise ist die Elektronikkomponente als ein Mikrocontroller oder Mikrochip ausgeführt. Die Elektronikkomponente ist vorzugsweise signalübertragungsgemäß mit dem elektropneumatischen Anzeigesignalwandler und gegebenenfalls mit dem elektro-pneumatischen Antriebssignalwandler verbunden.

Bei einer bevorzugten Ausführung der Erfindung sind der elektro-pneumatische Antriebssignalwandler und der elektro-pneumatische Anzeigesignalwandler im Hinblick auf die pneumatische Versorgung in Reihe oder in Serie geschaltet. Beide Wandler sind vorzugsweise mit derselben pneumatischen Quelle, insbesondere Druckluftquelle, wie einem Kompressor und/oder einem Druckluftreservoir, verbunden.

Bei einer bevorzugten Ausführung der Erfindung ist die pneumatisch betriebene Anzeige ausschließlich pneumatisch insbesondere durch das pneumatische Antriebsbetätigungssignal betrieben.

Bei einer bevorzugten Ausführung der Erfindung ist die pneumatisch betriebene Anzeige zum Ausgeben von zwei, drei, vier oder mehr diskreten optischen und/oder akustischen Signalen für feldgerätspezifische Betriebsinformationen ausgelegt. In Kombination oder alternativ dazu kann der elektro-pneumatische Aktor zwei, drei, vier oder mehr pneumatisch betriebene Anzeigen zum optischen und/oder akustischen Anzeigen von wenigstens einer feldgerätspezifischen Betriebsinformation aufweisen.
Bei einer Weiterbildung der Erfindung hat der elektro-pneumatische Aktor ein Komponentenmodul, das dazu ausgelegt ist, in einen modularen Steckplatz des Feldgeräts, insbesondere des Stellungsreglers, eingesteckt zu werden. Das Komponentenmodul des elektropneumatischen Aktors ist derart strukturiert, dass er den elektro-pneumatischen Antriebssignalwandler und/oder den elektro-pneumatischen Anzeigesignalwandler oder weitere Wandler aufnehmen kann. Insbesondere kann das Komponentenmodul derart modular auf den modularen Steckplatz abgestimmt sein, dass deren elektrische Schnittstellen bei Belegung des Steckplatzes ineinander übergehen und/oder dass deren pneumatische Steckstellen bei Belegung des Steckplatzes ineinander übergehen.
Des Weiteren betrifft die Erfindung ein Feldgerät für eine prozesstechnische Anlage, wie einer Brauerei, einer petrochemischen Anlage oder dergleichen. Das Feldgerät umfasst ein Stellgerät, wie ein Stellventil, ein Notsicherheitsventil oder dergleichen, einen pneumatischen Antrieb zum Stellen des Stellgeräts und einen erfindungsgemäßen, wie oben ausgeführten elektro-pneumatischen Aktor zum Abgeben eines pneumatischen Antriebsbetätigungssignals. Vorzugsweise hat das erfindungsgemäße Feldgerät wenigstens einen modularen Steckplatz zum Aufnehmen von wenigstens einem Komponentenmodul, wobei der wenigstens eine modulare Steckplatz der modularen auf das wenigstens eine Komponentenmodul abgestimmt ist, das den elektrischen Stellen bei Belegung des Steckplatzes ineinander übergehen und/oder dass die pneumatischen Schnittstellen bei Belegung des Steckplatzes ineinander, insbesondere luftdicht, übergehen.
Des Weiteren betrifft die Erfindung ein Verfahren zum Abgeben eines Betriebssignals wie eines Notsignals betreffend ein Feldgerät einer prozesstechnischen Anlage, wie einer Brauerei, einer petrochemischen Anlage oder dergleichen, wobei ein pneumatisches Antriebsbetätigungssignal an einen ein Stellgerät betätigenden pneumatischen Antrieb der prozesstechnischen Anlage von einem elektro-pneumatischen Aktor abgegeben wird. Von einem elektro-pneumatischen Anzeigesignalwandler des elektro-pneumatischen Aktor wird an eine pneumatisch betriebene Anzeige ein pneumatisches Anzeigebetätigungssignal übermittelt, und von der pneumatisch betriebenen Anzeige wird zu deren

Betrieb das pneumatische Anzeigebetätigungssignal empfangen. Daraufhin erzeugt die pneumatisch betriebene Anzeige ein optisches und/oder akustisches Betriebssignal. Durch die Anzeige wird zum Erzeugen des optischen und/oder akustischen Betriebssignals zumindest ein Teil der pneumatischen Energie des pneumatischen Anzeigebetätigungssignals verbraucht. Vorzugsweise wird die gesamte pneumatische Energie des pneumatischen Anzeigebetätigungssignals genutzt.

Erfindungsgemäß unterscheidet sich das pneumatische Anzeigebetätigungssignal von dem Antriebsbetätigungssignal, wie oben bereits ausgeführt ist.

Vorzugsweise wird neben der pneumatischen Energie des pneumatischen Anzeigebetätigungssignals keine elektrische Energie, insbesondere keinerlei zusätzliche Energie, zum Erzeugen des Betriebssignals durch die Anzeige verwendet.

Weitere Eigenschaften, Merkmale und Vorteile der Erfindung sind in der folgenden Beschreibung von Ausführungen der Erfindung anhand der beiliegenden Zeichnungen erläutert, in denen zeigen:
- Fig. 1: eine schematische Zeichnung eines Feldgeräts mit einem erfindungsgemäßen elektro-pneumatischen Aktor gemäß einer ersten Ausführung;
- Fig. 2: eine schematische Zeichnung eines Feldgeräts mit einem erfindungsgemäßen elektro-pneumatischen Aktor gemäß einer zweiten Ausführung;
- Fig. 3: eine schematische Zeichnung eines Feldgeräts mit einem erfindungsgemäßen elektro-pneumatischen Aktor in einer dritten Ausführung; und
- Fig. 4: ein Feldgerät mit einem erfindungsgemäßen elektro-pneumatischen Aktor, der modular ausgestaltet ist.

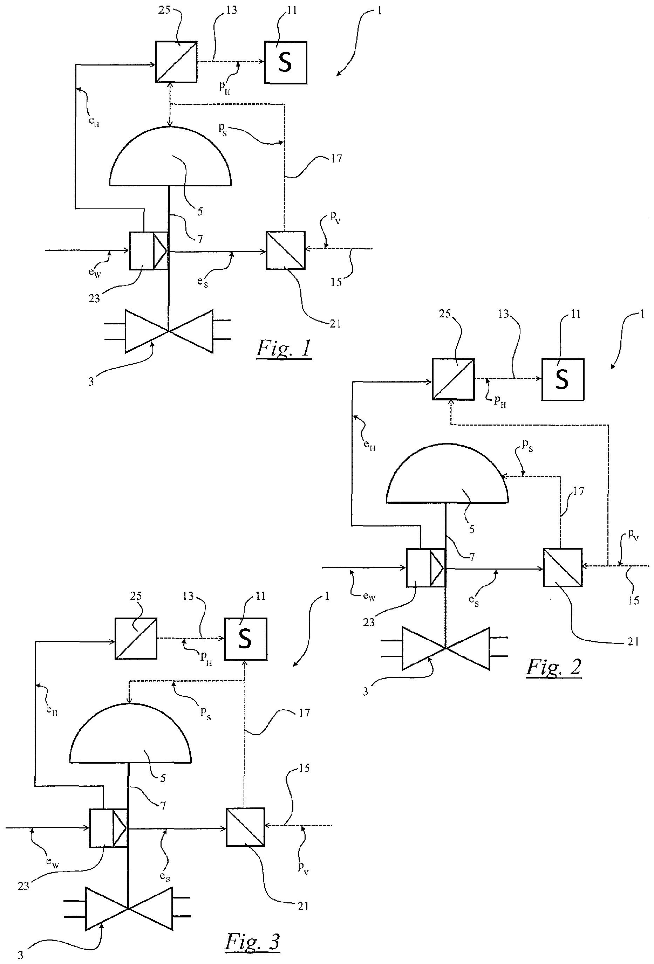

In den Figuren 1 bis 4 sind bevorzugte Ausführungen von erfindungsgemäßen elektropneumatischen Aktoren dargestellt. Dabei sind zur einfachen Lesbarkeit ähnliche oder identische Komponenten der unterschiedlichen bevorzugten Ausführungen im Folgenden mit denselben oder ähnlichen Bezugszeichen versehen.

Im Allgemeinen ist ein Feldgerät mit der Bezugsziffer 1 versehen. Das Feldgerät 1 ist mit einem elektro-pneumatischen Aktor, beispielsweise einem Stellungsregler, einem I/P-Wandler, einer I/P-Wandler-Anordnung, die mehrere I/P-Wandler umfasst, oder elektro-pneumatischen Verstärkern ausgestattet. Das Feldgerät 1 umfasst ein Stellventil 3, das durch einen pneumatischen Stellantrieb 5 betätigt bzw. gestellt ist, wobei die Stellkraft von dem pneumatischen Stellantrieb 5 mittels einer Stellstange oder Stellwelle 7 an das Stellventil 3 übertragen wird.
Der elektro-pneumatische Aktor des Feldgeräts 1 umfasst eine pneumatisch betriebene Anzeige 11, die akustisch oder visuell oder akustisch und visuell wenigstens eine Betriebsinformation des Feldgeräts anzeigen kann. Die Anzeige 11 kann ein Signal für eine Betriebsinformation beispielsweise akustisch als Hub-, Pfeif-, Sirenen- oder Perkussionssignal ausgeben oder optisch durch einmalige, mehrfache oder kontinuierliche Bewegung bzw. Positionsänderung eines optischen Signalkörpers anzeigen, wie einem farbig gekennzeichneten, leuchtenden und/oder reflektierenden Signalkörper. Der Signalkörper der optischen Anzeige kann beispielsweise als bewegliche, insbesondere als translationsbewegliche oder rotationsbewegte, Tafel realisiert sein. Denkbar ist als optische Anzeige auch ein zumindest abschnittsweise transparenter Hohlkörper, der mit verschiedenen Flüssigkeiten gefüllt ist, wobei abhängig von dem Hinweisdruck p_{H} der pneumatisch betätigten Anzeige 11 in dem transparenten Abschnitt eine transparente Flüssigkeit oder eine Flüssigkeit einer bestimmten Farbe sichtbar ist.
Zum Anzeigen empfängt die Anzeige 11 ein pneumatisches Anzeigesignal über eine pneumatische Anzeigesignalleitung 13 zum Übermitteln des Anzeigesignals. Der pneumatische Anzeigesignaldruck p_{H} in der Anzeigesignalleitung 13 kann aus derselben pneumatischen Quelle stammen (nicht dargestellt) stammen wie der pneumatische Stelldruck pₛ des pneumatischen Stellantriebs 5, der die Stellkraft zum Betätigen des Stellventils 3 bewirkt. Es ist aber auch denkbar, dass der pneumatische Stellantrieb 5 und die pneumatische Anzeige 11 aus funktionell voneinander unabhängigen, strukturell voneinander getrennten pneumatischen Quellen gespeist werden.
Unabhängig von der Art des Signals, welches die pneumatisch betriebene Anzeige 11 auszugeben ausgelegt ist, sei klar, dass die Energie, welche die Anzeige 11 zum Anzeigen des Anzeigesignals verwendet, der Anzeige 11 auf ausschließlich pneumatischem Wege zugeführt sein kann. Insbesondere kann die pneumatische Anzeige 11 frei von einer elektrischen Energieversorgung sein. Eine Anzeige 11, deren energetische Versorgung vollständig bzw. exklusiv durch pneumatische Energie (d.h. Luftdruck) bereitgestellt ist, ist insbesondere in einem explosionsgefährdeten Bereich von Vorteil, da eine Explosionsgefährdung durch elektrische Spannung einer Anzeigeelektronik vollständig eliminiert ist.

Insbesondere kann eine pneumatisch betriebene Anzeige 11 derart ausgelegt sein, dass abhängig von einem zugeführten Hinweisdruck p_{H} eines von zwei, drei oder vier diskreten vorbestimmten optischen und/oder akustischen Signalen ausgegeben wird. Insbesondere kommen unterschiedliche Farben oder Töne in Betracht.

Eine diskrete Signalausgabe der Anzeige 11 kann zum Beispiel erfolgen, indem der Hinweisdruckwandler 25 dazu ausgestaltet ist, abhängig von dem elektrischen Hinweissignal e_{H} einen von zwei, drei, vier oder mehr unterschiedlichen diskreten Hinweissignaldrucken p_{H} für die pneumatisch betriebene Anzeige 11 vorzugeben. Alternativ oder zusätzlich kann der elektro-pneumatische Aktor mehrere unterschiedliche pneumatische Anzeigen 11 zum Abgeben unterschiedlicher Signale, also Signale unterschiedlicher Art, oder unterschiedliche Signale gleicher Art, wie oben beschrieben, generieren. Die Anzeige 11 kann insbesondere unterschiedliche diskrete Signale für einen Ausfall, einen Normalbetrieb, einen Wartungsbedarf oder eine Funktionskontrolle, d.h. einer aktuell durchgeführten Wartung, bezüglich des Feldgeräts 1 signalisieren.

Bei den in den Figuren 1 bis 4 gezeigten bevorzugten Ausführungen ist eine einzige pneumatische Quelle zur Versorgung sowohl der pneumatischen Anzeige 11 wie auch des pneumatischen Stellantriebs 5 vorgesehen. Bei üblichen prozesstechnischen Anlagen stellt ein Kompressor und/oder Druckluftreservoir als pneumatische Quelle eine kontinuierliche Versorgung mit pneumatischer Energie bei einem Versorgungsdruck von 6 bar bereit. Dem Feldgerät 1 wird der Versorgungsdruck von der pneumatischen Quelle durch eine pneumatische Versorgungsleitung 15 bereitgestellt.

Zur Versorgung des pneumatischen Stellantriebs 5 mit pneumatischer Energie bzw. Versorgungsdruck pᵥ von der Versorgungsleitung 15 umfasst das Feldgerät 1 einen I/P-Wandler, der als Stelldruckwandler 21 bezeichnet sein kann, und der dem pneumatischen Stellantrieb 5 einen pneumatischen Stelldruck pₛ zum Betätigen des Stellventils 3 bereitstellt.

Zur Steuerung und/oder Regelung des Stellventils 3 mittels des pneumatischen Stellantriebs 5 kann das Feldgerät 1 einen Stellungsregler 23 aufweisen. Der Stellungsregler 23 erzeugt ein analoges oder digitales elektrisches Stellsignal eₛ, auf dessen Basis der Stelldruckwandler 21 den pneumatischen Stelldruck pₛ ändert.

Dabei sei klar, dass bei den bevorzugten Ausführungen der Figuren 1 bis 4 der pneumatische Stellantrieb 5 als einseitig wirkender Antrieb realisiert ist, wobei der Stelldruck pₛ eine Bewegung der Stellstange bzw. Stellwelle 7 nur in eine Richtung veranlasst. (Nicht dargestellte) Federn, die entgegen der Wirkrichtung des pneumatischen Antriebs 5 vorgespannt sind, bewirken eine Bewegung der Stellstange oder Stellwelle 7 in die entgegengesetzte Richtung, sofern die Federkraft die pneumatische Stellkraft übersteigt.

Es ist auch eine alternative Ausführung denkbar, bei der ein pneumatisch doppelt wirkender Antrieb zum Betätigen des Stellventils 3 vorgesehen ist, wobei jede Kammer einen einzelnen Stelldruckwandler erfordert, damit die Kammern entgegengesetzt wirken. Ein Druckgradient zwischen den Kammern bewirkt dann die Stellkraft für das Stellventil. Der Einfachheit halber wird im Folgenden jedoch weiterhin nur ein Feldgerät 1 mit einseitig wirkendem Stellantrieb 5 beschrieben.

Das Feldgerät 1 umfasst einen weiteren elektro-pneumatischen Wandler oder I/P-Wandler, der als Hinweisdruckwandler 25 bezeichnet sein kann, zum Bereitstellen des pneumatischen Hinweissignaldrucks p_{H} in der pneumatischen Anzeigesignalleitung 13 für die pneumatisch betriebene Anzeige 11. Der Hinweisdruckwandler 25 empfängt ein elektrisches Hinweissignal e_{H} von dem Stellungsregler 23 und gibt auf Basis des elektrischen Hinweissignals das pneumatische Hinweissignal bzw. den Hinweissignaldruck p_{H} für die Anzeige 11 aus. Im Hinblick auf den Versorgungsdruck pᵥ, den Stelldruck pₛ und den Hinweissignaldruck p_{H} sei klar, dass eventuelle Druckverluste entlang der jeweiligen druckführenden Leitung für Funktion des elektro-pneumatischen Aktors als vernachlässigbar zu betrachten sein können.

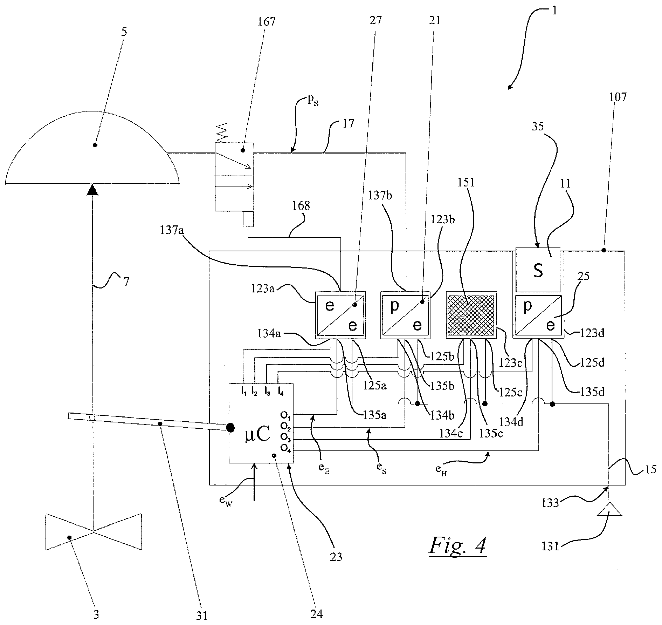

Bei einer nicht dargestellten alternativen Ausführung kann eine Hilfssignalelektronik zum Erzeugen des elektrischen Hinweissignals e_{H} vorgesehen sein, die strukturell getrennt und/oder funktionell unabhängig von dem Stellungsregler 23 zum Erzeugen des Stellsignals eₛ realisiert ist. Vorzugsweise ist aber, wie in Figur 4 dargestellt, nur ein Mikrocontroller 24 vorgesehen, der sowohl das elektrische Steuersignal eₛ wie auch das elektrische Hinweissignal e_{H}, für die beiden I/P-Wandler, den Stelldruckwandler 21 und den Hinweisdruckwandler 25, bereitstellt.

Der Stellungsregler 23 kann mehrere Ein- und Ausgänge für unterschiedliche Eingangsgrößen bzw. Ausgangsgrößen aufweisen. Neben den Ausgangsgrößen Hinweissignal e_{H} und Stellsignal eₛ kann der Stellungsregler 23 außerdem noch weitere Steuerungs- und/oder Regelungssignale abgeben, beispielsweise ein elektrisches Vorsteuersignal e_{E} für eine elektrische Vorsteuerstufe 27.

Neben oder alternativ zu einem elektrischen Leitsignal e_{w}, beispielsweise von einer Leitwarte der prozesstechnischen Anlage, kann der Stellungsregler 23 Eingangssignale, wie ein Notsignal oder ein Sensorsignal empfangen, die das Feldgerät 1 betreffen, beispielsweise ein Sensorsignal von einem Weg- oder Positionssensor 31, das die Position der Stellstange 7 bzw. der Stellwelle und des damit verbundenen Stellventils 3 angibt. Derartige Eingangssignale können bei der oben beschriebenen alternativen Ausführung auch der Hinweiselektronik bereitgestellt sein. Sensorsignale können auch den durch das Feldgerät 1 gestellten oder geregelten Prozess, insbesondere ein Prozessfluid betreffen, beispielsweise dessen Temperatur oder Druck. Ein Stellungsregler 23 mit einem Mikrocontroller 24 kann außerdem die Zeit als Eingangsgröße berücksichtigen. Anstelle eines Mikrocontrollers 24 kann die Elektronikkomponente einen Mikroprozessor gegebenenfalls mit einer separaten Speichereinheit und/oder eine elektrische Schaltung, wie einer analogen Schaltung, umfassen.

Das elektrische Hinweissignal e_{H} kann beispielsweise dann die Anzeige 11 zum Abgeben eines visuellen oder akustischen Hinweises oder Signals veranlassen, wenn eine bestimmte Betriebsinformation des Feldgeräts 1 auftritt, beispielsweise wenn ein Schwellenwert betreffend einen Druck, eine Temperatur, eine Ventilstellung oder dergleichen einen Mindestwert unterschreitet, einen Höchstwert überschreitet oder sich zwischen zwei bestimmten Grenzwerten, einem unteren Grenzwert und einem oberen Grenzwert, befinden. Die Anzeige 11 kann aber auch dann mittels eines entsprechenden Hinweissignaldrucks p_{H} betätigt werden, wenn ein bestimmter Betriebszustand verlassen wird, beispielsweise wenn eine Betriebsinformation wegfällt, etwa bei Ausfall einer elektrischen Energieversorgung des Feldgeräts 1 oder bei Ausfall der pneumatischen Versorgungsenergie des pneumatischen Stellantriebs 5 (etwa wenn die pneumatische Versorgungsenergie pᵥ für den pneumatischen Stellantrieb 5 unter einen Mindestdruck abfällt).

Bei der in Figur 1 dargestellten bevorzugten Ausführung entnimmt der Hinweisdruckwandler 25 pneumatische Energie aus der Stelldruckleitung 17, über die dem pneumatischen Stellantrieb 5 der Stelldruck pₛ durch den Stelldruckwandler 21 bereitgestellt wird. Da die pneumatische Energie zum Erzeugen des Hinweissignals mittels der pneumatisch betriebenen Anzeige 11 in der Regel im Verhältnis zu der Energie der pneumatischen Antriebsenergie, die der pneumatische Stellantrieb 5 zum Betätigen des Stellventils 3 aufbringt, sehr viel geringer ist, ist die Regelung des pneumatischen Stellantriebs 5 durch die Hinweisdruckentnahme durch den Hinweisdruckwandler 25, wenn überhaupt, dann nur geringfügig beeinträchtigt. Der Hinweisdruck p_{H} kann bei der Ausführung gemäß Figur 1 höchstens so groß sein wie der Stelldruck pₛ. Bei der Ausführung gemäß Figur 1 sind die Versorgungsleitung 15, die Stelldruckleitung 17 und die Anzeigesignalleitung 13 in Reihe geschaltet.

Demgegenüber unterscheidet sich die bevorzugte Ausführung gemäß Figur 2 dadurch, dass der Hinweissignaldruck p_{H} durch den Hinweisdruckwandler 25 direkt aus der Versorgungsleitung 15 entnommen und in die Anzeigesignalleitung 13 gespeist wird, um die Anzeige 11 zu betätigen. Aus der pneumatischen Versorgungsleitung 15 zieht gemäß Figur 2 auch der Stelldruckwandler 21 den pneumatischen Stelldruck pₛ für die Stelldruckleitung 17 zum Betätigen des pneumatischen Stellantriebs 5 ab. Bei der in Figur 2 dargestellten Ausführung sind also pneumatische Anzeigesignalleitungen 13 und pneumatische Stelldruckleitungen 17 zueinander parallel. Sowohl der Stelldruck pₛ wie auch der Hinweissignaldruck p_{H} können unabhängig voneinander maximal so groß sein wie der Versorgungsdruck p_{v,} aus dem sie gespeist werden.

Bei üblichen prozesstechnischen Anlagen ist das Quellvolumen, das den pneumatischen Versorgungsdruck pᵥ bereitstellt, sehr groß, so dass bei einer parallelen Anordnung von pneumatischer Anzeige 11 und pneumatischem Stellantrieb 5 gemäß Figur 2 eine im Wesentlichen unabhängige pneumatische Betätigung der beiden Komponenten realisiert ist. Daher kann eine solche Ausführung von Vorteil sein, wenn die pneumatische Leistungsaufnahme durch den pneumatischen Stellantrieb 5 und die pneumatische Anzeige 11 etwa in der gleichen Größenordnung liegen, beispielsweise wenn eine besonders leistungsfähige Anzeige 11 und/oder ein besonders kleine dimensionierter pneumatischer Aktor 5 vorgesehen sind.

Indem der Stelldruck pₛ durch den Stelldruckwandler 21 und der Hinweissignaldruck p_{H} durch den Hinweisdruckwandler 25 jeweils unmittelbar aus der Versorgungsleitung 15 entnommen werden, ist außerdem gewährleistet, dass bei Notentlüftung des pneumatischen Stellantriebs 5, in Folge eines Prozessfehlers oder dergleichen, und einer daraus erfolgenden Notentlüftung der Stelldruckleitung 17, nicht die Versorgung der Anzeige 11 mit Druckluft beeinträchtigt wird. Bei der bevorzugten Ausführung gemäß Figur 2 sind die pneumatische Versorgung der pneumatischen Anzeige 11 und des pneumatischen Antriebs 5 anders gesagt derart voneinander entkoppelt, dass bei Entlüftung der einen Leitung nicht die andere Leitung entlüftet wird. Es sei klar, dass sich bei "Entlüftung" in der entlüfteten Leitung ein Druck einstellt, der in etwa dem Atmosphärendruck entspricht oder zumindest signifikant unter dem Versorgungsdruck pᵥ liegt. Durch die pneumatische Entkopplung von Anzeige 11 und Antrieb 5 kann die Anzeige 11 also insbesondere auch bei Entlüftung des Stellantriebs 5 ein Signal, wie ein Notfallsignal, abgeben.

Bei der in Figur 3 dargestellten bevorzugten Ausführung ist nicht dargestellt, woher der pneumatische Versorgungsdruck für den Hinweisdruckwandler 25 und die dadurch, mittels der pneumatischen Anzeigesignalleitung 13, versorgte pneumatisch betriebene Anzeige 11 stammt. Der Hinweissignaldruckwandler 25 kann pneumatische Energie, wie in Figur 1, aus dem Stelldruck pₛ des pneumatischen Antriebs 5 entnehmen. Bevorzugt wird zur pneumatischen Versorgung des Hinweisdruckwandlers 25 gemäß Figur 3 jedoch eine Versorgung unmittelbar aus der pneumatischen Versorgungsleitung 15, wie in Figur 2 dargestellt, oder aus einer (nicht dargestellten) pneumatischen Versorgungsleitung von einer anderen Quelle realisiert. Auf diese Weise ist die Betätigung der Anzeige 11 pneumatisch unabhängig von dem Stelldruckwandler 21 des pneumatischen Antriebs 5 oder sogar von der gesamten Versorgungspneumatik des pneumatischen Stellantriebs 5.

Weiter unterscheidet sich die in Figur 3 dargestellte bevorzugte Ausführung von den vorherigen dadurch, dass der pneumatisch betriebenen Anzeige 11 sowohl ein Hinweissignaldruck p_{H} bereitgestellt wird, der durch den Hinweisdruckwandler 25 definiert ist, wie auch der Stelldruck pₛ des pneumatischen Stellantriebs 5. Auf diese Weise ist die Anzeigeausgabe der pneumatisch betätigten Anzeige 11 abhängig sowohl von dem Stelldruck pₛ wie auch dem Hinweissignaldruck p_{H}. Die pneumatisch betätigte Anzeige 11 kann dann, wie ein logischer UND-Baustein, einen bestimmten Betriebszustand anzeigen, wenn auf beiden Leitungen 13 und 17 ein bestimmter Druck (größer als der Umgebungsdruck) anliegt. Insbesondere kann die pneumatische Anzeige 11 gemäß Figur 3 aber auch so ausgestaltet sein, dass ein optisches und/oder akustisches Not-Signal dann angezeigt wird, wenn auf beiden Leitungen, Anzeigesignalleitung 13 und Stelldruckleitung 17, oder nur auf einer der beiden Leitungen, Anzeigesignalleitung 13 oder Stelldruckleitung 17, kein Druck (d.h. der Umgebungsdruck) anliegt. Auf diese Weise ist eine pneumatisch redundante Notsignal-Anzeige realisiert.
Die spezielle bevorzugte Ausgestaltung eines modular aufgebauten Feldgeräts 1 gemäß Figur 4, kann ebenfalls mit einem erfindungsgemäßen elektro-pneumatischen Aktor ausgestattet sein. Die grundsätzliche Struktur und Funktion eines modularen Feldgerätesystem wird in den deutschen Patentanmeldungen DE 10 2012 021 387 und DE 10 2012 021 388 beschrieben. Das in Figur 4 dargestellte Feldgerät 1 hat eine Strom-Druckwandlung bzw. eine I/P-Wandler-Anordnung mit einem pneumatischen Feldeingang 133, an dem die pneumatische Versorgungsleitung 15, die durch pneumatischen Versorgungsdruck pᵥ von der Versorgungsquelle 131 gespeist ist, in die Strom-Druck-Wandlung 107 eintritt. Ferner hat die Strom-Druckwandlung 107 vier Steck- oder Einschubplätze 123a, 123b, 123c, 123d, die im Wesentlichen gleich aufgebaut und von außerhalb der Strom-Druckwandlung 107 frei zugänglich sind. Die Steck- oder Einschubplätze 123a, 123b, 123c, 123d sind optional mit vier einzelnen modularen Elektronikbausteinen unterschiedlicher Bauart belegbar.
Gemäß Figur 4 ist in dem Steck- oder Einschubplatz 123d ein Anzeigemodul 35 eingesetzt, welches einen Hinweisdruckwandler 25 und eine pneumatische Anzeige 11 umfasst, die betriebsgemäß pneumatisch mit dem Hinweisdruckwandler 25 verbunden ist. Es sei klar, dass der signalemitierende Teil der pneumatisch betätigten Anzeige 11 bei betriebsgemäß in den Steck- oder Einschubplatz 123d eingesetztem Anzeigemodul 35 derart im Verhältnis zu der Strom-Druckwandlung 7 und dem Anzeigemodul 35, insbesondere dem jeweiligen Gehäuse, angeordnet ist, dass ein durch die Anzeige 11 abgegebenes akustisches und/oder optisches Signal wahrnehmbar ist. Beispielsweise kann zu diesem Zweck eine optische Anzeige, wie in Figur 4 schematisch dargestellt, über das Gehäuse der Strom-Druckwandlung 7 hervorstehen, um für Betriebspersonal sichtbar zu sein. Eine akustische Anzeige braucht nicht notwendigerweise von außerhalb des Gehäuses der Strom-Druckwandlung (oder dem Gehäuse des Anzeigemoduls 35) sichtbar zu sein, solange gewährleistet ist, dass das akustische Signal der akustischen Anzeige 11 betriebsgemäße Umgebungsgeräusche des Feldgeräts 1 merklich übertönt.

Als weitere modulare Elektronikbausteine können beispielsweise ein I/P-Wandler, wie der Stelldruckwandler 21, ein Datenspeicher, ein pneumatisch betriebener Stromgenerator, ein Mikroprozessor 24 und/oder ein Elektronikschalter, wie die elektrische Vorsteuerstufe 27, vorgesehen sein, wobei auch modulare Elektronikbausteine gleicher Bauart unterschiedlicher Funktionsweisen oder Leistungsparameter in den Steckplätzen eingesetzt werden können. Die Steckplätze 123a bis 123d sind derart modular angepasst, dass sie, je nachdem welcher vorbestimmte modulare Elektronikbaustein eingesetzt wird, die Funktion des Elektronikbausteins durch Herstellung von elektrischen und/oder pneumatischen Kommunikationsleitungen zu den jeweils anderen Bauelementen gewährleisten.

Die Steckplätze 123a bis 123d haben eine pneumatische Eingangsschnittstelle 125a bis 125d, die mit der Versorgungsleitung 15 verbunden ist, sowie elektrische Eingangsschnittstellen 135a bis 135d, die mit dem Mikroprozessor 23 verbunden sind, sowie Ausgangsschnittstellen 134a bis 134d. Jeder Steckplatz 123a kann außerdem eine Ausgangsschnittstelle 137a, 137b haben (Ausgangsschnittstellen der Steckplätze 123c und 123d sind nicht dargestellt), über die Ausgangssignale elektrischer oder pneumatischer Natur, jener Art des modularen Elektronikbausteins, abgegeben werden können.

Bei der in Figur 4 dargestellten bevorzugten Ausführung erfolgt die pneumatische Versorgung des Stelldruckwandler 21 und des Hinweisdruckwandlers 25 im Wesentlichen so wie bei der in Figur 2 dargestellten, oben beschriebenen, Ausführung, in der der Stelldruckwandler 21 und der Hinweisdruckwandler 25 den Versorgungsdruck pᵥ der pneumatischen Versorgungsleitung 15 empfangen. Gegenüber der Ausführung von Figur 2 unterscheidet sich die Ausführung der Figur 4 im Wesentlichen durch das Notentlüftungsventil, dass als Magnetventil 167 realisiert sein kann oder alternativ (nicht dargestellt) als pneumatisch betätigter Schnellentlüfter, wobei bei einem pneumatisch betätigten Schnellentlüfter anstelle einer elektrischen Vorsteuerstufe 27 eine pneumatische Vorsteuerstufe zur Abgabe eines Notentlüftungssignals über eine Notentlüftungssignalleitung 168 an das Notentlüftungsventil abgegeben würde.

Als modularer elektronischer oder elektro-pneumatischer Baustein kann in einem beliebigen Steckplatz 123a bis 123c auch eine andere Komponente der Strom-Druckwandlung eingesetzt sein, wie der Mikroprozessor 23, ein Datenspeicher, ein Funkmodul oder beispielsweise eine elektrische Schaltung zur Kommunikation mit externen elektrischen Baukomponenten. Für einen Steckplatz 123c der Strom-Druckwandlung 107 kann ein Leermodul 151 vorgesehen sein, das weder eine elektronische noch eine pneumatische Komponente enthält, sondern im Wesentlichen nur der mechanischen Abdeckung eines nicht-funktionell belegten Steckplatzes dient.

Zur weiteren Funktionalität des modularen Feldgeräts 1, insbesondere bezüglich der Kommunikation zwischen dem Mikrocontroller 23 und den einzelnen elektronischen und/oder elektro-pneumatischen modularen Bausteinen, über deren Schnittstellen 134a bis 134d und 135a bis 135d sei auf die beiden oben genannten Anmeldungen DE 10 2012 021 387 und DE 10 2012 021 388 verwiesen.

Alternativ zu den beschriebenen Ausführungen kann (nicht dargestellt) eine zweite pneumatisch betätigte Anzeige 11 mit einem dazugehörigen (zweiten) Hinweisdruckwandler vorgesehen sein, welcher der zusätzlichen (zweiten) Anzeige einen (zweiten) Hinweissignaldruck zuführt, der sich von dem Stelldruck pₛ zum Betreiben des pneumatischen Antriebs 5 wie auch von dem Hinweissignaldruck p_{H} zum Betreiben der (ersten) pneumatisch betriebenen Anzeige 11 unterscheidet.

Beispielsweise könnte anstelle des in Figur 4 dargestellten Leermoduls 151 ein (nicht dargestelltes) zweites Anzeigemodul vorgesehen sein. So könnten beispielsweise pneumatisch redundant Signale erzeugt werden oder unterschiedliche pneumatische Signalanzeigen für unterschiedliche Signalarten (optisch oder akustisch) oder unterschiedliche Signale gleicher Art (beispielsweise Töne unterschiedlicher Tonhöhe) vorgesehen sein, etwa für unterschiedliche feldgerätespezifische Betriebsinformationen.

Die in der vorstehenden Beschreibung, den Figuren oder den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Feldgerät
- 3: Stellventil
- 5: Stellantrieb
- 7: Stellstange/Stellwelle
- 11: Anzeige
- 13: Anzeigesignalleitung
- 15: Versorgungsleitung
- 17: Stelldruckleitung
- 21: Stelldruckwandler
- 23: Stellungsregler
- 24: Mikrocontroller/Mikroprozessor
- 25: Hinweisdruckwandler
- 27: Vorsteuerstufe
- 31: Weg- oder Positionssensor
- 35: Anzeigemodul
- 107: Strom-Druck-Wandlung
- 131: Versorgungsquelle
- 133: Feldeingang
- 123a, 123b, 123c, 123d: Steck- oder Einschubplatz
- 125a, 125b, 125c, 125d: pneumatische Eingangsschnittstelle
- 134a, 134b, 134c, 134d: Ausgangsschnittstelle
- 135a, 135b, 135c, 135d: elektrische Eingangsschnittstelle
- 167: Magnetventil

- e_{E}: Steuersignal
- e_{H}: Hinweissignal
- e_{S}: Stellsignal
- e_{W}: Leitsignal
- p_{H}: Hinweisdruck
- p_{S}: Stelldruck
- p_{V}: Versorgungsenergie

## Patentansprüche

1. Elektro-pneumatischer Aktor, wie ein Stellungsregler oder eine IP-Wandler-Anordnung, für ein Feldgerät (1) einer prozesstechnischen Anlage, wie einer Brauerei, einer petrochemischen Anlage oder dergleichen, umfassend eine pneumatisch betriebene Anzeige (11) zum optischen und/oder akustischen Anzeigen wenigstens einer feldgerätspezifischen Betriebsinformation, wie einer Antriebs- oder Ventilstellung, eines Sollwerts, eines Istwerts oder einer Regelungsgröße,
wobei der elektro-pneumatischen Aktor dazu ausgelegt ist, an einen pneumatischen Antrieb des Feldgeräts (1) ein pneumatisches Antriebsbetätigungssignal auszugeben, um ein Stellgerät, wie ein Stellventil (3), des Feldgeräts (1) zu stellen,
wobei außerdem der elektro-pneumatische Aktor dazu ausgelegt ist, an die pneumatisch betriebene Anzeige (11) wenigstens ein pneumatisches Anzeigebetätigungssignal auszugeben, das sich von dem pneumatischen Antriebsbetätigungssignal unterscheiden kann, **dadurch gekennzeichnet dass**,
der elektro-pneumatische Aktor einen elektro-pneumatischen Anzeigesignalwandler (25) zum Abgeben des zumindest einen pneumatischen Anzeigebetätigungssignals abhängig von der feldgerätspezifischen Betriebsinformation umfasst.

2. Elektro-pneumatischer Aktor nach Anspruch 1, **gekennzeichnet durch** einen elektro-pneumatischen Antriebssignalwandler zum Abgeben des pneumatischen Antriebsbetätigungssignals.

3. Elektro-pneumatischer Aktor nach Anspruch 1 oder 2, **gekennzeichnet durch** eine Elektronikkomponente zum Erfassen, Erhalten, Abgeben und/oder Generieren der feldgerätspezifischen Betriebsinformation, welche Elektronikkomponente das pneumatischen Anzeigebetätigungssignal veranlasst, wobei insbesondere die Elektronikkomponente einen Mikrocontroller (24), Mikroprozessor und/oder eine elektrische Schaltung umfasst.

4. Elektro-pneumatischer Aktor nach Anspruch 3 **dadurch gekennzeichnet, dass** die Elektronikkomponente, wie ein Mikrocontroller (24), signalübertragungsgemäß mit dem elektro-pneumatischen Anzeigesignalwandler und gegebenenfalls mit dem elektro-pneumatischen Antriebssignalwandler verbunden ist.

5. Elektro-pneumatischer Aktor nach einem der Ansprüche 2 bis 4, **dadurch gekennzeichnet, dass** der elektro-pneumatische Antriebssignalwandler und der elektro-pneumatische Anzeigesignalwandler in Reihe oder in Serie mit derselben pneumatischen Quelle verbunden sind.

6. Elektro-pneumatischer Aktor nach einem der vorstehenden Ansprüche, **dadurch gekennzeichnet, dass** die Anzeige (11) ausschließlich pneumatisch insbesondere durch das pneumatische Antriebsbetätigungssignal betrieben ist.

7. Elektro-pneumatischer Aktor nach einem der vorstehenden Ansprüche, **dadurch gekennzeichnet, dass** die Anzeige (11) zum Ausgeben von zwei, drei, vier oder mehr diskreten optischen und/oder akustischen Signalen für feldgerätspezifische Betriebsinformationen ausgelegt ist und/oder dass der elektro-pneumatische Aktor zwei, drei, vier oder mehr pneumatisch betriebene Anzeigen (11) zum optischen und/oder akustischen Anzeigen von wenigstens einer feldgerätspezifischen Betriebsinformation aufweist.

8. Elektro-pneumatischer Aktor nach einem der vorstehenden Ansprüche, **dadurch gekennzeichnet, dass** ein Komponentenmodul zum Einstecken in einen modularen Steckplatz (123a, 123b, 123c, 123d) des Feldgeräts (1) vorgesehen ist, der insbesondere den elektropneumatischen Antriebssignalwandler und/oder den elektropneumatischen Anzeigesignalwandler aufnimmt,
wobei insbesondere das Komponentenmodul derart modular auf den modularen Steckplatz (123a, 123b, 123c, 123d) abgestimmt ist, dass deren elektrische Schnittstellen (135a, 135b, 135c, 135d) bei Belegung des Steckplatzes ineinander übergehen und/oder dass deren pneumatische Schnittstellen (125a, 125b, 125c, 125d) bei Belegung des Steckplatzes (123a, 123b, 123c, 123d) ineinander übergehen.

9. Feldgerät (1) für eine prozesstechnische Anlage, wie eine Brauerei, eine petrochemische Anlage, etc., umfassend ein Stellgerät, wie ein Stellventil (3), einen pneumatischen Antrieb zum Stellen des Stellgeräts und einen nach einem der Ansprüche 1 bis 8 ausgestalteten elektro-pneumatischen Aktor zum Abgeben eines pneumatischen Antriebsbetätigungssignals .

10. Feldgerät (1) nach Anspruch 9, **gekennzeichnet durch** wenigstens einen modularen Steckplatz (123a, 123b, 123c, 123d) zum Aufnehmen von wenigstens einem Komponentenmodul, wobei der wenigstens eine modularen Steckplatz (123a, 123b, 123c, 123d) derart modular auf das wenigstens eine Komponentenmodul abgestimmt ist, dass deren elektrische Schnittstellen (135a, 135b, 135c, 135d) bei Belegung des Steckplatzes ineinander übergehen und/oder dass deren pneumatische Schnittstellen (125a, 125b, 125c, 125d) bei Belegung des Steckplatzes (123a, 123b, 123c, 123d) ineinander übergehen.

11. Verfahren zum Abgeben eines Betriebssignals, wie eines Notsignals, betreffend ein Feldgerät (1) einer prozesstechnische Anlage, wie einer Brauerei, einer petrochemischen Anlage, etc., wobei
ein pneumatisches Antriebsbetätigungssignal an einen ein Stellgerät betätigenden pneumatischen Antrieb der prozesstechnischen Anlage von einem elektropneumatischen Aktor abgegeben wird, von einem elektro-pneumatischen Anzeigesignalwandler (25) des elektro-pneumatischen Aktor an eine pneumatisch betriebene Anzeige (11) ein pneumatisches Anzeigebetätigungssignal übermittelt wird,
von der pneumatisch betriebenen Anzeige (11) zu deren Betrieb das pneumatische Anzeigebetätigungssignal empfangen wird,
die Anzeige (11) ein optisches und/oder akustisches Betriebssignal erzeugt,
durch die Anzeige (11) zum Erzeugen des Betriebssignals zumindest ein Teil der pneumatischen Energie des pneumatischen Anzeigebetätigungssignals verbraucht wird und
sich das pneumatische Anzeigebetätigungssignal von dem Antriebsbetätigungssignal unterscheidet.

12. Verfahren nach Anspruch 11, **dadurch gekennzeichnet, dass** neben der pneumatischen Energie des pneumatischen Anzeigebetätigungssignals keine elektrische Energie, insbesondere keinerlei zusätzliche Energie, zum Erzeugen des Betriebssignals durch die Anzeige (11) verwendet wird.

## Claims

1. An electro-pneumatic actuator, such as a positioner or an I/P transducer array, for a field device (1) of a processing plant, such as a brewery, a petrochemical plant or the like, comprising a pneumatically operated display (11) for visually and/or acoustically displaying at least one field device-specific operating information, such as a drive or valve position, a desired value, an actual value or a regulating variable,
wherein the electro-pneumatic actuator is designed to output a pneumatic drive actuating signal to a pneumatic drive of the field device (1), so as to set a final controlling device, such as a control valve (3), of the field device (1),
wherein the electro-pneumatic actuator is further designed to output at least one pneumatic display actuating signal to the pneumatically operated display (11), which can differ from the pneumatic drive actuating signal, **characterized in that** the electro-pneumatic actuator comprises an electro-pneumatic display signal transducer (25) for delivering the at least one pneumatic display actuating signal depending on the field device-specific operating information.

2. The electro-pneumatic actuator according to claim 1, **characterized by** an electro-pneumatic drive signal transducer for delivering the pneumatic drive actuating signal.

3. The electro-pneumatic actuator according to claim 1 or 2, **characterized by** an electronic component for acquiring, receiving, delivering and/or generating the field device-specific operating information, wherein the electronic component causes the pneumatic display actuating signal, wherein in particular the electronic component comprises a microcontroller (24), a microprocessor and/or an electrical circuit.

4. The electro-pneumatic actuator according to claim 3, **characterized in that** the electronic component, such as a microcontroller (24), is connected with the electro-pneumatic display signal transducer and potentially with the electro-pneumatic drive signal transducer in a signal transmitting manner.

5. The electro-pneumatic actuator according to one of claims 2 to 4, **characterized in that** the electro-pneumatic drive signal transducer and electro-pneumatic display signal transducer are connected in a row or in series with the same pneumatic source.

6. The electro-pneumatic actuator according to one of the preceding claims, **characterized in that** the display (11) is exclusively pneumatically operated, in particular via the pneumatic drive actuating signal.

7. The electro-pneumatic actuator according to one of the preceding claims, **characterized in that** the display (11) is configured to output two, three, four or more discrete visual and/or acoustic signals for field device-specific operating information, and/or **in that** the electro-pneumatic actuator exhibits two, three, four or more pneumatically operated displays (11) for visually and/or acoustically displaying at least one field device-specific operating information.

8. The electro-pneumatic actuator according to one of the preceding claims, **characterized in that** a component module for insertion into a modular slot (123a, 123b, 123c, 123d) of the field device (1) is provided, which in particular receives the electro-pneumatic drive signal transducer and/or the electro-pneumatic display signal transducer,
wherein in particular the component module is modularly configured to the modular slot (123a, 123b, 123c, 123d) such that its electrical interfaces (135a, 135b, 135c, 135d) merge into each other when occupying the slot and/or that their pneumatic interfaces (125a, 125b, 125c, 125d) merge into each other when occupying the slot (123a, 123b, 123c, 123d).

9. A field device (1) for a processing plant, such as a brewery, a petrochemical plant, etc., comprising a final controlling device, such as a control valve (3), a pneumatic drive for positioning the final controlling device and an electro-pneumatic actuator designed according to one of claims 1 to 8 for delivering a pneumatic drive actuating signal.

10. The field device (1) according to claim 9, **characterized by** at least one modular slot (123a, 123b, 123c, 123d) for receiving at least one component module, wherein the at least one modular slot (123a, 123b, 123c, 123d) is modularly adjusted to the at least one component module such that their electrical interfaces (135a, 135b, 135c, 135d) merge into each other when occupying the slot and/or that their pneumatic interfaces (125a, 125b, 125c, 125d) merge into each other when occupying the slot (123a, 123b, 123c, 123d).

11. A method for delivering an operating signal, such as an emergency signal, relating to a field device (19) of a processing plant, such as a brewery, a petrochemical plant, etc., wherein
a pneumatic drive actuating signal is delivered from an electro-pneumatic actuator to a pneumatic drive of the processing plant that actuates a final controlling device,
a pneumatic display actuating signal is delivered from an electro-pneumatic display signal transducer (25) of the electro-pneumatic actuator to a pneumatically operated display (11),
the pneumatically operated display (11) receives the pneumatic display actuating signal for its operation,
the display (11) generates a visual and/or acoustic operating signal,
the display (11) consumes at least part of the pneumatic energy of the pneumatic display actuating signal for generating the operating signal, and
the pneumatic display actuating signal differs from the drive actuating signal.

12. The method according to claim 11, **characterized in that**, apart from the pneumatic energy of the pneumatic display actuating signal, no electrical energy, in particular no additional energy, is used by the display (11) to generate the operating signal.

## Revendications

1. Acteur électropneumatique, tel qu'un régleur de position ou un dispositif de conversion IP, pour un appareil de champ (1) d'une installation de traitement technique, telle qu'une brasserie, une installation pétrochimique ou similaire, comprenant un afficheur (11) fonctionnant par système pneumatique pour l'affichage optique et/acoustique d'au moins une information de fonctionnement spécifique à l'appareil de champ, telle qu'une position d'organe de commande ou de soupape, une valeur théorique, une valeur réelle ou un paramètre de réglage,
l'acteur électropneumatique étant conçu pour émettre, au niveau d'un organe de commande pneumatique de l'appareil de champ (1), un signal pneumatique d'actionnement de commande afin de mettre en place un appareil de réglage, tel qu'une soupape de réglage (3), de l'appareil de champ (1),
l'acteur électropneumatique étant en outre conçu pour envoyer à l'afficheur fonctionnant par système pneumatique (11) au moins un signal pneumatique d'actionnement d'afficheur qui peut se différencier du signal pneumatique d'actionnement d'organe de commande (25), **caractérisé en ce que** l'acteur électropneumatique comprend un convertisseur électropneumatique de signal d'affichage (25) pour émettre l'au moins un signal pneumatique d'actionnement d'affichage en fonction de l'information de fonctionnement spécifique à l'appareil de champ.

2. Acteur électropneumatique selon la revendication 1, **caractérisé par** un convertisseur électropneumatique de signal de commande pour émettre le signal pneumatique d'actionnement d'organe de commande.

3. Acteur électropneumatique selon la revendication 1 ou 2, **caractérisé par** un composant électronique pour enregistrer, conserver, émettre et/ou générer l'information de fonctionnement spécifique à l'appareil de champ, lequel composant électronique déclenche le signal pneumatique d'actionnement d'affichage, le composant électronique comprenant en particulier un microcontrôleur (24), un microprocesseur et/ou un circuit électrique.

4. Acteur électropneumatique selon la revendication 3, **caractérisé en ce que** le composant électronique, tel qu'un microcontrôleur (24) est raccordé suivant le transfert de signal au convertisseur électro pneumatique de signal d'affichage et le cas échéant ou convertisseur électro pneumatique de signal de commande.

5. Acteur électropneumatique selon une des revendications 2 à 4, **caractérisé en ce que** le convertisseur électropneumatique de signal d'entraînement et le convertisseur pneumatique de signal d'affichage sont reliés en rangée ou en série à la même source pneumatique.

6. Acteur électropneumatique selon une des revendications précédentes, **caractérisé en ce que** l'afficheur (11) est actionné exclusivement par système pneumatique, en particulier par le signal pneumatique d'actionnement de commande.

7. Acteur électropneumatique selon une des revendications précédentes, **caractérisé en ce que** l'afficheur (11) est conçu pour émettre deux, trois, quatre signaux optiques et/ou acoustiques discrets ou davantage pour des informations de fonctionnement spécifiques à l'appareil de champ et que l'acteur électro pneumatique présente deux, trois, quatre afficheurs à actionnement pneumatique (11) ou davantage pour l'affichage optique et/ou acoustique dans une information de fonctionnement spécifique à l'appareil de champ.

8. Acteur électropneumatique selon une des revendications précédentes, **caractérisé en ce qu'**il est prévu un module de composants fiché dans un emplacement de fichage modulaire (123a, 123b, 123c, 123d) de l'appareil de champ (1) et qui reçoit en particulier le convertisseur électro pneumatique de signal d'entraînement et/ou le convertisseur électro pneumatique de signal d'affichage,
le module de composant étant en particulier adapté de manière modulaire (123a, 123b, 123c, 123d) à l'emplacement de fichage modulaire de manière à ce que ses interfaces électriques (135a, 135b, 135c, 135d), en cas d'occupation de l'emplacement de fichage (125a, 125b, 125c, 125d), transitent les unes dans les autres et/ou que, en cas d'occupation de l'emplacement de fichage (123a, 123b, 123c, 123d), ses interfaces pneumatiques (125a, 125b, 125c, 125d) transitent les unes dans les autres.

9. Appareil de champ (1) pour installation de traitement technique, telle qu'une brasserie, une installation pétrochimique etc., comprenant un appareil de réglage, tel qu'une soupape de réglage (3), un organe de commande pneumatique pour le réglage de l'appareil de réglage et un acteur électro pneumatique conçu selon une des revendications 1 à 8 pour l'émission d'un signal pneumatique d'actionnement de commande.

10. Appareil de champ (1) selon la revendication 9, **caractérisé par** au moins un emplacement de fichage modulaire (123a, 123b, 123c, 123d) destiné à recevoir au moins un module de composants, l'au moins un emplacement de fichage modulaire (123a, 123b, 123 c, 123d) étant adapté de manière modulaire à l'au moins un module de composant de manière à ce que ses interfaces électriques (135a, 135b, 135c, 135d), en cas d'occupation de l'emplacement de fichage, transitent l'une dans l'autre et/ou à ce que ses interfaces pneumatiques (125a, 125b, 125c, 125d), en cas d'occupation de l'emplacement de fichage (123a, 123b, 123c, 123d), transitent l'un dans l'autre.

11. Procédé d'émission d'un signal de fonctionnement, tel qu'un signal de détresse, concernant un appareil de champ (1) d'une installation de traitement technique, telle qu'une brasserie, une installation pétrochimique etc., dans lequel un signal pneumatique d'actionnement de commande est émis vers un organe de commande pneumatique de l'installation de traitement technique par un acteur électro pneumatique,
un signal pneumatique d'actionnement d'affichage est transmis par un convertisseur électro pneumatique de signal d'affichage (25) à un afficheur (11) fonctionnant par système pneumatique,
le signal pneumatique d'actionnement d'affichage est reçu par l'afficheur (11) fonctionnant par système pneumatique pour lui permettre de fonctionner, l'afficheur (11) génère un signal de fonctionnement optique et/acoustique,
au moins une partie de l'énergie pneumatique du signal pneumatique d'actionnement d'affichage est consommée par l'afficheur (11) pour générer le signal de fonctionnement et
le signal pneumatique d'actionnement d'afficheur se différencie du signal pneumatique d'actionnement de commande.

12. Procédé selon la revendication 11, **caractérisé en ce que**, à part l'énergie pneumatique du signal pneumatique d'actionnement d'affichage, aucune énergie électrique, en particulier aucune énergie supplémentaire, n'est utilisée par l'afficheur (11) pour générer le signal de fonctionnement.
